# FASCICULE DE BREVET EUROPEEN

(11) **EP 1 963 688 B1**
(45) Date de publication et mention de la délivrance du brevet: **14.10.2009**
(21) Numéro de dépôt: 06841563.7
(22) Date de dépôt: 21.12.2006
(51) Int. Cl.: F16B 2/06, F16B 9/02

(54) **AGENCEMENT POUR L'ASSEMBLAGE DE DEUX PIECES PAR VISSAGE PAR L'INTERMEDIAIRE D'UN ENSEMBLE VIS-ECROU**
ANORDNUNG ZUR ZUSAMMENSETZUNG ZWEIER TEILE DURCH SCHRAUBBEFESTIGUNG ÜBER EIN SCHRAUBEN-MUTTERN-SYSTEM
ARRANGEMENT FOR ASSEMBLING TWO PARTS BY SCREW-FASTENING USING A SCREW-NUT SYSTEM

(30) Priorité: 23.12.2005 FR 0554071
(43) Date de publication de la demande: 03.09.2008
(73) Titulaire: Sidel Participations, 76930 Octeville Sur Mer (FR)
(72) Inventeur: GERNEZ, Alain, F-21640 Flagey-Echezeaux (FR)
(74) Mandataire: Thibaudeau, David A. C. R.
(86) Numéro de dépôt international: PCT/EP2006/070105
(87) Numéro de publication internationale: WO 2007/071769

(56) Documents cités:
- WO-A-86/00453
- US-A- 5 674 023

## Description

La présente invention concerne un agencement pour l'assemblage de deux pièces par vissage par l'intermédiaire d'un ensemble vis-écrou, selon le préambule de la revendication 1. Un tel agencement est connu du document US-A-5,674,023.

On connaît de nombreuses solutions pour assembler deux pièces métalliques entre elles, telles que par exemple le soudage, le rivetage ou encore le vissage.

Dans le cas d'un assemblage en bout d'une première pièce plane orthogonalement avec une deuxième pièce, les solutions connues ne donnent pas entière satisfaction.

En effet, le rivetage ou le soudage nécessitent, pour être mises en oeuvre, une partie de fixation pliée en "L" pour former un bord ou des pattes, laquelle est par exemple réalisée en bout de la première pièce et s'étend alors globalement parallèlement au plan de la deuxième pièce, notamment pour permettre la mise en place des rivets dans le premier cas ou une bonne tenue mécanique dans le second.

La réalisation d'une telle partie de fixation sur la première pièce en augmente le coût global de fabrication et on notera de plus que ces deux modes d'assemblage présentent l'inconvénient de ne pas permettre un démontage simple et aisé des deux pièces ainsi assemblées de sorte qu'en fonction des applications, on leurs préférera un assemblage par vissage.

Le document US-A-5,674,023 décrit un assemblage en bout d'une première pièce plane avec une deuxième pièce par l'intermédiaire d'un crochet présentant globalement une forme en "U" qui, encore appelé "clip", assure le maintien des deux pièces orthogonalement l'une par rapport à l'autre.

Le crochet d'assemblage en "U" comporte une partie intermédiaire de liaison se raccordant respectivement à une partie supérieure munie à son extrémité libre d'un bras d'accrochage et une partie inférieure formant un socle pour la fixation du crochet.

Comme on peut le voir sur les figures 1 et 2 de ce document, le bras d'accrochage du crochet est destiné à traverser la première pièce qui comporte à cet effet un trou, tandis que la partie formant socle est rapportée à fixation sur la deuxième pièce notamment par l'intermédiaire d'une vis qui traverse les parties supérieure et inférieure.

L'extrémité de la tige filetée de la vis de fixation du crochet sur la deuxième pièce est reçue dans un trou taraudé complémentaire que comporte la deuxième pièce et la tête de la vis exerce un effort axial de serrage sur la partie supérieure du crochet de manière que le bras d'accrochage coopère avec une partie de la première pièce adjacente au trou.

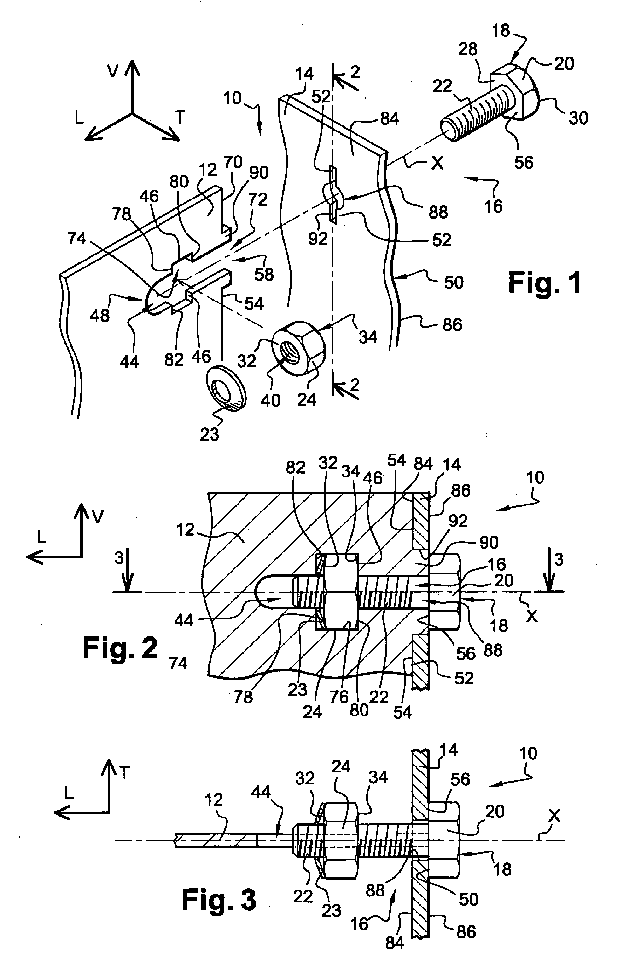

Lorsque, comme l'illustre la figure 3, la deuxième pièce présente une faible épaisseur ne permettant pas de réaliser un tel trou taraudé, la tige filetée de la vis de fixation traverse alors la deuxième pièce pour être immobilisée au moyen d'un écrou.

Une telle solution ne donne cependant pas entière satisfaction, notamment en raison de la tenue mécanique d'un tel assemblage lorsque les pièces sont soumises à des contraintes importantes, comme par exemple pour réaliser un bâti d'une machine, ou encore en raison de leur coût de fabrication.

L'invention a notamment pour but de résoudre ces inconvénients et de proposer un agencement pour l'assemblage de deux pièces par vissage permet notamment d'assembler deux pièces en bout, orthogonalement l'une par rapport à l'autre, lorsqu'au moins l'une des pièces présente une faible épaisseur, et sans toutefois nécessiter d'élément d'assemblage, tel qu'un crochet ou clip, autre que l'ensemble vis-écrou.

Dans ce but, l'invention propose un agencement pour l'assemblage de deux pièces par vissage par l'intermédiaire d'un ensemble vis-écrou, **caractérisé en ce qu**'il comporte :
- une première pièce plane verticale d'orientation générale longitudinale comportant un logement qui s'étend axialement suivant un axe de vissage compris dans le plan vertical d'orientation longitudinale de la première pièce et dans lequel sont reçus la vis et l'écrou dont au moins une partie coopère avec une surface de butée du logement de manière à immobiliser axialement l'écrou lors de l'application d'un effort de serrage, et
- une deuxième pièce d'orientation générale transversale, orthogonale au plan de la première pièce, comportant au moins une première surface d'appui et une deuxième surface d'appui qui, en position assemblée, coopèrent respectivement avec une surface de réaction de la première pièce et avec une surface de serrage de la vis dont la tige filetée de la vis s'étend axialement à travers la deuxième pièce de manière qu'une partie de la vis applique un effort axial de serrage sur ladite deuxième surface d'appui pour immobiliser les première et deuxième pièces.

Selon d'autres caractéristiques de l'invention :
- les première et deuxième surfaces d'appui et les surfaces de réaction et de serrage s'étendent chacune globalement dans un plan vertical d'orientation transversale orthogonal au plan de la première pièce ;
- la surface de butée est à une première extrémité axiale distale du logement ;
- la surface de réaction est à l'autre extrémité axiale proximale du logement ;
- la surface de serrage de la vis est la surface annulaire de la tête à partir de laquelle s'étend la tige filetée ;
- le logement est débouchant à son extrémité proximale dans un bout de la première pièce qui constitue la surface de réaction ;
- le logement est obtenu par une découpe laser de la première pièce plane ;
- les première et deuxième pièces comportent des moyens complémentaires d'assemblage par coopération de formes, tels que des tenons et des mortaises, de manière à assurer le centrage et à limiter la déformation des pièces lors du serrage ;
- l'effort axial de serrage s'applique suivant un axe de vissage qui est compris dans le plan vertical d'orientation longitudinal de la première pièce.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente en éclaté un exemple de réalisation d'un agencement selon l'invention ;
- les figures 2 et 3 sont des vues en coupe, respectivement par un plan vertical et par un plan horizontal, de l'agencement selon la figure 1 représenté en position assemblée ;
- la figure 4 est une vue en perspective qui représente en éclaté une variante de l'exemple de réalisation selon la figure 1 ;
- les figures 5 et 6 sont des vues en coupe, respectivement par un plan vertical et par und plan horizontal, de la variante de l'agencement selon la figure 4 représenté en position assemblée.

Par convention, et à titre non limitatif, on utilisera les termes "axiale", "proximale" ou "distale" et les directions "longitudinale", "verticale" ou "transversale" pour désigner respectivement des éléments selon les définitions données dans la description et par rapport au trièdre (L, V, T) représenté sur les figures.

Dans la suite de la description, des éléments similaires ou identiques seront désignés par les mêmes références.

On a représenté aux figures 1 à 3, un exemple de réalisation d'un agencement 10 pour l'assemblage en bout d'au moins une première pièce 12 et d'une deuxième pièce 14 par vissage par l'intermédiaire d'un ensemble vis-écrou 16.

Selon le trièdre (L, V, T) de la figure 1, la première pièce 12 s'étend verticalement suivant la direction longitudinale et la deuxième pièce 14 s'étend verticalement suivant la direction transversale, orthogonalement à la première pièce 12.

De manière connue, l'ensemble vis-écrou 16 comporte une vis 18 comprenant principalement une tête 20 solidaire de l'extrémité axiale d'une tige filetée 22 et au moins un écrou 24.

La tête 20 de la vis 18 comporte principalement une surface verticale annulaire 28 à partir de laquelle s'étend axialement la tige filetée 22 et une surface verticale libre 30 opposée à la tige 22.

Par convention, dans la description qui suit, un élément est dit "proximal" lorsqu'il est proche longitudinalement des parties des première et deuxième pièces 12, 14 assemblées l'une avec l'autre et "distal" dans le cas inverse.

L'écrou 24 comporte ainsi une face verticale distale 32 et une face verticale proximale 34, opposée axialement à la surface distale 32.

L'écrou 24 comporte un trou taraudé 40 qui est de préférence traversant, c'est-à-dire qui débouche dans la face verticale distale 32 et dont le taraudage interne est complémentaire du filetage externe de la tige 22 de la vis 18.

En position assemblée, la vis 18 et l'écrou 24 coopèrent ensemble et sont assemblés suivant l'axe longitudinal X de symétrie de l'ensemble vis-écrou 16 qui correspond à l'axe de vissage.

Les faces verticales distale 32 et proximale 34 sont globalement annulaires et entourent le trou 40 de passage de la tige filetée 22.

L'ensemble vis-écrou 16 constitue avantageusement des moyens de fixation démontables permettant notamment l'assemblage des deux pièces 12, 14 dans une position déterminée, en particulier une position dans laquelle la première pièce 12 est agencée orthogonalement par rapport à la deuxième pièce 14.

En effet, tel qu'illustré aux figures 2 et 3, l'ensemble vis-écrou 16 est, en position assemblée, susceptible d'exercer un effort axial de serrage, suivant la direction longitudinale, pour immobiliser lesdites première et deuxième pièces 12, 14.

La première pièce 12 est plane et forme une plaque verticale d'orientation générale longitudinale qui présente transversalement une épaisseur très inférieure au diamètre de la tige filetée 22 de la vis 18.

La deuxième pièce 14 est d'orientation générale transversale et s'étend verticalement, orthogonalement au plan de la première pièce 12.

Selon l'invention, l'agencement 10 comporte :
- une première pièce plane 12 comportant un logement 44 qui s'étend axialement suivant un axe de vissage compris dans le plan de la première pièce 12 et dans lequel sont reçus la vis 18 et l'écrou 24 dont au moins une partie 32, 34 coopère avec une surface de butée 46 du logement 44 de manière à immobiliser axialement l'écrou 24 lors de l'application d'un effort de serrage, et
- une deuxième pièce 14 comportant au moins une première surface d'appui 50 et une deuxième surface d'appui 52 qui, en position assemblée, coopèrent respectivement avec une surface de réaction 54 de la première pièce 12 et avec une surface de serrage 56 de la vis 18 dont la tige filetée 22 de la vis 18 s'étend axialement à travers la deuxième pièce 14 de manière qu'une partie 28 de la vis 18 applique un effort axial de serrage sur ladite deuxième surface d'appui 52 pour immobiliser les première et deuxième pièces 12, 14.

La première pièce 12 comporte un logement 44 qui s'étend longitudinalement suivant un axe de vissage compris dans le plan vertical de la première pièce 12, c'est-à-dire dans le plan (L, V) du trièdre représenté à la figure 1, et dans lequel sont notamment reçus la vis 18 et l'écrou 24 de l'ensemble vis-écrou 16.

En position assemblée illustrée à la figure 2 ou 3, au moins une partie de la face proximale 34 de l'écrou 24 coopère avec une surface de butée 46 du logement 44 de manière à immobiliser axialement l'écrou 24 lors de l'application par l'ensemble vis-écrou 16 d'un effort de serrage.

Avantageusement, la surface de butée 46 est agencée à une première extrémité axiale distale 48 du logement 44.

La deuxième pièce 14 comporte au moins une première surface d'appui 50 et une deuxième surface d'appui 52 qui, en position assemblée, coopèrent respectivement avec une surface de réaction 54 de la première pièce 12 et, directement ou indirectement, avec une surface de serrage 56 de la tête de vis 20.

La surface de réaction 54 est agencée à une autre extrémité axiale proximale 58 du logement 44, c'est-à-dire axialement à l'opposé de la surface de butée 46.

L'extrémité distale 48 du logement 44 est conformée de manière à présenter globalement un pourtour en "U", de dimensions complémentaires à celles de la tige filetée 22 de l'écrou 24 qui y est reçu.

De préférence, le logement 44 comporte des moyens de retenue de l'écrou qui coopèrent avec une partie complémentaire de l'écrou 24 de manière à permettre, avant l'opération de serrage, au moins un montage de l'écrou 24 avec la première pièce 12 pour former un sous-ensemble unitaire.

Avantageusement, l'écrou 24 préalablement assemblé est ainsi susceptible d'être pré-monté dans le logement 44 avant l'assemblage des première et deuxième pièce 12, 14.

De préférence, les moyens de retenue bloquent l'écrou 24 ou l'ensemble 16 selon au moins l'une des directions tranversale et/ou verticale et permettent avantageusement d'assurer un montage de type imperdable.

Les première et deuxième surfaces d'appui 50, 52 de la deuxième pièce 14 sont par conséquent constituées par des portions de surfaces des faces transversales distale 84 et proximale 86.

Lors du vissage, la longueur axiale de l'ensemble vis-écrou diminue de sorte que plus l'effort axial de serrage exercé par la surface de serrage 56 de la tête de vis 20 croit plus des efforts de sens opposé sont appliqués par réaction entre la partie de la face proximale 34 de l'écrou 24 et la surface de butée 46 du logement 44 ce qui tend à immobiliser automatiquement l'écrou 24, notamment en rotation par rapport à l'axe X de vissage.

Avantageusement, l'agencement 10 présente une compacité optimale, en effet l'ensemble vis-écrou 16 est entièrement reçu dans le logement 44 de manière que l'encombrement suivant la direction transversale correspond sensiblement à celui de la première pièce 12.

Avantageusement, le logement 44 est obtenu par une découpe laser de la première pièce plane 12 qui est constituée d'une tôle dont l'épaisseur est par exemple comprise entre 2 mm et 8 mm.

La fabrication du logement 44 et/ou de la première pièce 12 par un tel procédé de découpe est particulièrement simple, rapide et économique à mettre en oeuvre.

Selon une caractéristique particulièrement avantageuse de l'agencement 10, l'effort de serrage appliqué par la surface de serrage 56 de la tête 20 de la vis 18, directement ou indirectement sur la deuxième surface d'appui 52 est toujours orthogonal au plan vertical d'orientation transversale de la deuxième pièce 14 et cela quelle que soit la position de la première pièce 12.

Le logement 44 débouche, à son extrémité axiale proximale 58, dans un bout de la première pièce 12 constituant la surface de réaction 54.

Le bout de la première pièce 12 est formé par un bord vertical 70 qui détermine, suivant l'épaisseur de la première pièce 12, la surface verticale de réaction 54. Le bord vertical 70 comporte une ouverture axiale 72 pour permettre, en position assemblée, l'introduction axiale de la tige filetée 22 de la vis 18 dans le logement 44.

Le logement 44 de forme générale oblongue comporte, axialement entre l'ouverture 72 et son extrémité axiale distale 48, une encoche vertical 74 dans laquelle est reçu l'écrou 24 et qui est ici de forme parallélépipédique complémentaire de l'écrou 24.

Plus précisément, l'encoche 74 présente une symétrie par rapport à l'axe longitudinal X de vissage et elle est délimitée verticalement par un bord longitudinal 76 et longitudinalement ou axialement par un bord vertical distal 78 formant une surface verticale distale 82 et par un bord vertical proximal 80 comportant la surface de butée 46.

Avantageusement, l'écrou 24 est monté solidaire de la première pièce 12 de manière à permettre notamment des montages "en aveugle" des pièces 12, 14.

De préférence, l'écrou 24 est monté en force avec une rondelle élastique 23 qui soit susceptible de s'expandre longitudinalement dans l'encoche vertical 74 du logement 44 pour permettre, en rattrapant le jeu axial, d'immobiliser l'écrou 24 dans l'encoche 74 et cela au moins jusqu'à qu'il soit procédé à l'assemblage des pièces 12, 14 et que la tige 22 de la vis 18 soit engagée dans l'écrou 24.

L'écrou 24 est alors immobilisé longitudinalement entre la surface de butée 46 et la surface verticale distale 82.

En variante, l'écrou 24 est susceptible d'être immobilisé dans l'encoche 74 par tout moyen approprié par exemple par collage ou par soudage.

La deuxième pièce verticale 14 comporte une face transversale distale 84 et une face transversale proximale 86 et un perçage axial 88 traversant les faces 84, 86.

Comme on peut le voir sur les figures 2 et 3, en position assemblée des pièces 12 et 14 orthogonalement l'une par rapport à l'autre, la tige filetée 22 de la vis 18 traverse le perçage axial 88 puis l'ouverture 72 du logement 44 enfin le trou taraudé 40 de l'écrou 24.

La tige filetée 22 de la vis 18 s'étend ainsi longitudinalement à travers la deuxième pièce 14 et la tête de la vis 20 est en appui contre la face transversale proximale 86.

La surface de serrage 56 est constituée par la surface annulaire 28 de la tête de vis 20 à partir de laquelle s'étend la tige filetée 22, la surface de serrage 56 coopère ainsi directement avec une partie de la face transversale proximale 86 adjacente au perçage 88 formant la première surface d'appui 50.

En variante (non représentée), une rondelle est interposée axialement entre la surface annulaire 28 de la tête de vis 20 et la deuxième pièce 14 de manière que la surface de serrage 56 ne coopère pas directement avec la partie de la face transversale proximale 86, de manière à éviter notamment tout risque de matage.

La surface verticale de réaction 54 du bord vertical 70 coopère avec la deuxième surface d'appui 52 qui est constituée par une partie de la face transversale distale 84.

Avantageusement, les première et deuxième surfaces d'appui 50, 52 et les surfaces de butée 46, de réaction 54 et de serrage 56 s'étendent chacune globalement dans un plan vertical d'orientation transversale, orthogonal au plan de la première pièce 12.

De préférence, les première et deuxième pièces 12, 14 comportent des moyens complémentaires d'assemblage par coopération de formes, par exemple du type tenons mortaises.

Avantageusement, les moyens complémentaires d'assemblage assurent une fonction de positionnement des première et deuxième pièces 12, 14 dans la position d'assemblage, en particulier pour assurer le centrage du perçage 88 et de l'ouverture 72 du logement 44 respectivement traversés par la tige filetée 22 de la vis 18.

Comme illustré sur les figures 2 et 3, la première pièce 12 comporte, par exemple verticalement de part et d'autre de l'ouverture 72 du logement 44, un tenon 90 qui s'étend axialement et qui est reçu dans une mortaise complémentaire 92 que comporte, ici contigu au perçage 88, la deuxième pièce 14.

La tête de vis 20 est ici accessible pour être manoeuvrée au moyen d'un outil de serrage, tel qu'une clé, afin de procéder au serrage de l'ensemble vis-écrou 16.

Dans l'exemple de réalisation, la longueur axiale comprise entre la tête de vis 20 et l'écrou 24 diminue lorsque l'effort de serrage appliqué croit.

L'écrou 24 est immobilisé en rotation par deux pans opposés qui coopèrent avec les bords longitudinaux 76 délimitant verticalement l'encoche 74.

De plus, l'écrou 24 tend à s'immobiliser axialement dès lors qu'un certain effort de serrage est appliqué sur la tête de vis 20 car il provoque par réaction une coopération selon un effort axial croissant, de sens opposé à l'effort axial de serrage, entre une partie de la face proximale 34 de l'écrou 24 et la surface de butée 46 du logement 44.

En variante (non représentée), la vis 18 est remplacée par un moyen équivalent tel qu'une tige filetée 22 associé à un autre écrou formant "une tête de vis 20" avantageusement mobile axialement sur la tige 22 de sorte que l'ensemble vis-écrou 16 est alors constitué par la tige filetée 22 et deux écrous 20, 24.

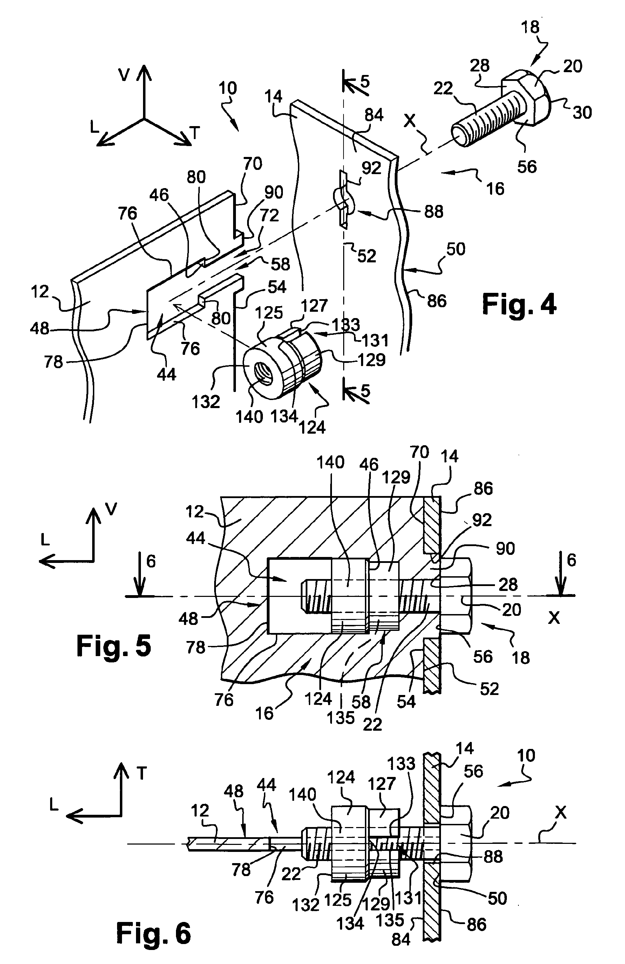

On décrira ci-après, par comparaison avec l'exemple de réalisation, l'agencement 10 représenté aux figures 4 à 6 qui illustrent une variante de réalisation de l'assemblage de la première pièce plane 12 et de la deuxième pièce 14 par vissage par l'intermédiaire d'un ensemble vis-écrou 16.

L'ensemble vis-écrou 16 comporte une vis 18 identique à celle décrite précédemment et un écrou fendu 124

Selon la variante illustrée aux figures 4 à 6, l'écrou 24 est un écrou fendu qui permet avantageusement d'intégrer les moyens de retenue de l'écrou 24 sur la première pièce 12.

D'autres avantages de l'utilisation d'un tel écrou fendu comme l'immobilisation en rotation après le montage dans le logement de la première pièce seront mieux compris à la lecture de la description qui suit.

L'écrou fendu 124 comporte un corps 125 constitué d'une partie distale comportant une face verticale distale 132 et d'une partie proximale comportant une fente verticale 131.

La fente 131 débouche longitudinalement dans la surface cylindrique externe du corps 125 de l'écrou 124 de sorte que la partie distale du corps 125 est respectivement constituée par un premier bras 127 et par un deuxième bras 129.

La fente 131 est délimitée longitudinalement par une face verticale proximale 134 formant un fond et, à l'opposé, est ouverte axialement entre l'extrémité proximale libre de chaque bras 127, 129 de manière à permettre son montage sur la première pièce 12.

L'écrou fendu 124 comporte un trou taraudé 140 qui s'étend axialement à travers tout le corps 125, soit depuis l'extrémité proximale libre des bras de retenue 127, 129 jusqu'à la face verticale distale 132 dans laquelle il débouche.

Le premier bras 127 comporte une face verticale intérieure 133 et le deuxième bras 129 comporte une face verticale intérieure 135, lesdites faces intérieures s'étendant latéralement de part et d'autre du trou taraudé 140.

La distance comprise transversalement entre les faces intérieures 133 et 135 correspond ainsi à une côte transversale déterminée de la fente 131, ou écartement, qui est avantageusement inférieure ou sensiblement égale à l'épaisseur de la première pièce plane 12 selon la direction transversale.

Le trou taraudé 140 est complémentaire du filetage externe de la tige 22 de la vis 18 avec lequel il coopère lorsque la vis 18 et l'écrou fendu 124 sont assemblés suivant l'axe X de l'ensemble vis-écrou 16 qui correspond à l'axe de vissage.

La face verticale distale 132 est globalement annulaire et entoure le trou taraudé 140 permettant le passage de la tige filetée 22.

De préférence, la face verticale proximale 134 et les faces 133, 135 entre lesquelles la face 134 s'étend verticalement, sont planes de sorte que la face 134 étant orthogonale à chacune des faces 133, 135, la fente 131 présente en section par un plan horizontal globalement une forme en "U" couché.

De préférence, l'écrou fendu 124 est introduit axialement dans le logement 44 jusqu'à ce que la face verticale proximale 134 coopère avec la face verticale de butée 46 de manière à garantir un montage correct de l'écrou 124.

La face intérieure 133 du premier bras supérieur 127 coopère alors avec la partie en vis-à-vis de la face latérale de la première pièce plane 12 et la face intérieure opposée 135 du deuxième bras 129 coopère la partie en vis-à-vis de l'autre face latérale de la première pièce plane 12.

Avantageusement, l'écrou 124 est monté en force dans le logement 44 de manière que la fente 131 qu'il comporte étant de dimension inférieure ou égale à l'épaisseur de la première pièce 12, les bras 127 et 129 viennent "pincer" la pièce 12.

L'écrou 124 est alors monté de manière imperdable sur la première pièce 12 et il est immobilisé en rotation par les bras de retenue 127, 129 qui coopèrent avec la première pièce 12 de sorte que le serrage pour l'assemblage des première et deuxième pièces 12, 14 est obtenu de manière simple et rapide en manoeuvrant uniquement la vis 18.

Bien entendu dans le cas d'un montage en force de l'écrou 124, l'immobilisation axiale est obtenue par la coopération de formes entre les bras 127, 129 de l'écrou 124 et la première pièce 12 que la face verticale proximale 134 coopère ou non avec la face verticale de butée 46.

La fente 131 de l'écrou 124 s'étend dans le plan de la première pièce 12, c'est à dire verticalement suivant la direction longitudinale.

Ainsi, les faces inférieure 133 et supérieure 135 des bras de retenue 127, 129 sont ici respectivement verticales.

La première pièce plane 12 comporte un logement 44 qui diffère de l'exemple de réalisation précédent en ce que l'encoche verticale 74 dans laquelle est reçu l'écrou 124 s'étend longitudinalement jusqu'à l'extrémité distale 48 du logement 44.

Plus précisément, l'encoche 74 de forme parallélépipédique présente une symétrie par rapport à l'axe X de vissage et elle est délimitée verticalement par un bord longitudinal 76 et longitudinalement par un bord vertical distal 78 et par un bord vertical proximal 80 comportant la surface de butée 46.

Le montage de l'écrou 124 est réalisé en introduisant tout d'abord l'écrou 124 transversalement dans l'encoche 74 du logement puis en l'engageant ensuite au contact de la pièce 12 suivant un déplacement longitudinal de l'extrémité distale 48 vers l'extrémité proximale 58 du logement 44 pour obtenir la position représentée aux figures 5 et 6.

Avantageusement, l'écrou 124 est de préférence monté en force sur la première pièce 12 d'épaisseur de manière que les bras 127 et 129 immobilisent l'écrou 124 par rapport à la première pièce 12.

L'écrou 124 est donc susceptible d'être pré-monté dans l'encoche transversale 74 du logement 44 de manière à être avantageusement solidaire de la première pièce 12 et à former un sous-ensemble, en particulier pour permettre des montages "en aveugle" des pièces 12, 14.

De manière analogue, la deuxième pièce verticale 14 comporte une face transversale distale 84 et une face transversale proximale 86 et un perçage axial 88 traversant les faces 84, 86.

Comme on peut le voir sur les figures 5 et 6, en position assemblée des pièces 12 et 14 orthogonalement l'une par rapport à l'autre, la tige filetée 22 de la vis 18 traverse le perçage axial 88 puis l'ouverture 72 du logement 44 enfin le trou taraudé 40 de l'écrou 124.

La tige filetée 22 de la vis 18 s'étend ainsi axialement à travers la deuxième pièce 14 et la tête de la vis 20 est en appui contre la face transversale proximale 86.

La surface de serrage 56 est constituée par la surface annulaire 28 de la tête de vis 20 à partir de laquelle s'étend la tige filetée 22, la surface de serrage 56 coopère ainsi directement avec une partie de la face transversale proximale 86 adjacente au perçage 88 formant la première surface d'appui 50.

La surface verticale de réaction 54 du bord vertical 70 coopère avec la deuxième surface d'appui 52 qui est constituée par une partie de la face transversale distale 84.

Avantageusement, les première et deuxième surfaces d'appui 50, 52 et les surfaces de butée 46, de réaction 54 et de serrage 56 s'étendent chacune globalement dans un plan vertical d'orientation transversale orthogonal au plan de la première pièce 12.

De préférence, les première et deuxième pièces 12, 14 comportent des moyens complémentaires d'assemblage par coopération de formes par exemple au moyen de tenons 90 reçus dans des mortaises 92, les dits moyens assurant avantageusement une fonction de centrage par rapport à l'axe X de vissage.

Avantageusement, la coopération entre les tenons 90 de la première pièce 12 et les mortaises 92 de la deuxième pièce 14 assure une rigidité d'ensemble qui limite notamment les risques de déformation de la deuxième pièce 14 lors du serrage de l'ensemble vis-écrou 16.

La tête de vis 20 est ici accessible pour être manoeuvrée au moyen d'un outil de serrage, tel qu'une clé, afin de procéder au serrage de l'ensemble vis-écrou 16.

En variante, la tête de vis comporte une poignée de manoeuvre.

Avantageusement, en position assemblée, l'écrou 124 est immobilisé en rotation par coopération de formes entre les faces 133, 135 de chacun des bras de retenue 127, 129 avec une partie en vis-à-vis des faces verticales de la première pièce 12.

Comme pour l'exemple de réalisation, la longueur axiale comprise entre la tête de vis 20 et l'écrou 124 diminue lorsque l'effort de serrage appliqué croit.

L'écrou 124 tend donc à s'immobiliser axialement dès lors qu'un certain effort de serrage est appliqué sur la tête de vis 20 car il provoque par réaction une coopération selon un effort axial croissant, de sens opposé à l'effort axial de serrage, entre la face proximale 134 de l'écrou 124 et la surface de butée 46 du logement 44.

Bien entendu, l'invention n'est nullement limitée à l'exemple de réalisation et la variante qui sont décrits et représentés dans les figures uniquement à titre d'exemple.

Il est notamment possible d'inverser les moyens décrits, en particulier la tête de vis 20 et l'écrou 24 de manière que l'effort axial de serrage soit appliqué par l'écrou 24.

En variante, la surface de serrage 56 est alors constituée par l'une des faces verticales distale 32 ou proximale 34 de l'écrou 24 (ou encore d'un autre écrou) et la partie coopérant avec la surface de butée 46 est constituée par la surface libre 30 ou la surface annulaire 28 de la tête de vis 20.

Avantageusement, l'agencement 10 comporte des moyens pour positionner les première et deuxième pièces 12, 14 à assembler dans une position d'assemblage déterminée.

De préférence, les moyens de positionnement (non représentés) sont réalisés par coopération de formes entre un élément femelle, par exemple solidaire de la deuxième pièce 14, et un élément mâle complémentaire, par exemple solidaire de la première pièce 12 ou de l'ensemble vis-écrou 16.

Avantageusement, de tels moyens de positionnement permettent d'immobiliser transversalement les première et deuxième pièces 12, 14 en position assemblée.

## Revendications

1. Agencement (10) pour l'assemblage de deux pièces (12, 14) par vissage par l'intermédiaire d'un ensemble vis-écrou (16, 18, 24), comportant:
- une première pièce plane (12) verticale d'orientation générale longitudinale, et
- une deuxième pièce (14) d'orientation générale transversale, orthogonale au plan de la première pièce (12), qui comporte au moins une première surface d'appui (50) et une deuxième surface d'appui (52) qui, en position assemblée, coopèrent respectivement avec une surface de réaction (54) de la première pièce (12) et avec une surface de serrage (56) de la vis (18) dont la tige filetée (22) de la vis (18) s'étend axialement à travers la deuxième pièce (14) de manière qu'une partie (28) de la vis (18) applique un effort axial de serrage sur ladite deuxième surface d'appui (52) pour immobiliser les première et deuxième pièces (12, 14), caratérisé en ce que la première pièce comporte un logement (44) qui s'étend axialement suivant un axe de vissage compris dans le plan vertical d'orientation longitudinale de la première pièce (12) et dans lequel sont reçus la vis (18) et l'écrou (24) dont au moins une partie (32, 34) coopère avec une surface de butée (46) du logement (44) de manière à immobiliser axialement l'écrou (24) lors de l'application d'un effort de serrage.

2. Agencement selon la revendication 1, **caractérisé en ce que** les première et deuxième surfaces d'appui (50, 52) et les surfaces de réaction (54) et de serrage (56) s'étendent chacune globalement dans un plan vertical d'orientation transversale, orthogonal au plan de la première pièce (12).

3. Agencement selon l'une des revendications 1 ou 2, **caractérisé en ce que** la surface de butée (46) est à une première extrémité axiale distale (48) du logement (44).

4. Agencement selon l'une quelconque des revendications précédentes, **caractérisé en ce que** la surface de réaction (54) est à l'autre extrémité axiale proximale (58) du logement (44).

5. Agencement selon l'une quelconque des revendications précédentes, **caractérisé en ce que** la surface de serrage (56) de la vis (18) est la surface annulaire (28) de la tête (20) à partir de laquelle s'étend la tige filetée (22).

6. Agencement selon l'une quelconque des revendications précédentes, **caractérisé en ce que** le logement (44) est débouchant à son extrémité proximale (58) dans un bout (70) de la première pièce (12) qui constitue la surface de réaction (54).

7. Agencement selon l'une quelconque des revendications précédentes, **caractérisé en ce que** le logement (44) est obtenu par une découpe laser de la première pièce plane (12).

8. Agencement selon l'une quelconque des revendications précédentes, **caractérisé en ce que** les première et deuxième pièces (12, 14) comportent des moyens complémentaires d'assemblage par coopération de formes, tels que des tenons (90) et des mortaises (92), de manière à assurer le centrage et à limiter la déformation des pièces (12, 14) lors du serrage.

9. Agencement selon l'une quelconque des revendications précédentes, **caractérisé en ce que** l'effort axial de serrage s'applique suivant un axe (X) de vissage qui est compris dans le plan vertical d'orientation longitudinale de la première pièce (12).

## Claims

1. An arrangement (10) for assembling two parts (12, 14) by screw-fastening using a screw-nut system (16, 18, 24), it comprising:
- a first vertical planar part (12) of generally longitudinal orientation, and
- a second part (14) of generally transverse orientation, at right angles to the plane of the first part (12), which comprises at least a first bearing surface (50) and a second bearing surface (52) which, in the assembled position, engage respectively with a reaction surface (54) on the first part (12) and with a clamping surface (56) on the screw (18) in which the threaded rod (22) of the screw (18) extends axially through the second part (14) in such a way that a portion (28) of the screw (18) applies an axial clamping force to said second bearing surface (52) to immobilize the first and second parts (12, 14),
**characterized in that** the first part comprises a housing (44) that extends axially along a screw-fastening axis in the vertical of longitudinal orientation plane of the first part (12), in which are accommodated the screw (18) and the nut (24), of which at least a portion (32, 34) engages with an abutment surface (46) of the housing (44) in such a way as axially to immobilize the nut (24) when a clamping force is applied.

2. The arrangement as claimed in claim 1, **characterized in that** the first and second bearing surfaces (50, 52) and the reaction surface (54) and clamping surface (56) each extend generally in a vertical plane at right angles to the vertical plane of transverse orientation of the first part (12).

3. The arrangement as claimed in either of claims 1 and 2, **characterized in that** the abutment surface (46) is at a first or distal axial end (48) of the housing (44).

4. The arrangement as claimed in any one of the preceding claims, **characterized in that** the reaction surface (54) is at the other or proximal axial end (58) of the housing (44).

5. The arrangement as claimed in any one of the preceding claims, **characterized in that** the clamping surface (56) of the screw (18) is the annular surface (28) of the head (20) from which the threaded rod (22) extends.

6. The arrangement as claimed in any one of the preceding claims, **characterized in that** the housing (44) comes to an open proximal end (58) in an end (70) of the first part (12) which forms the reaction surface (54).

7. The arrangement as claimed in any one of the preceding claims, **characterized in that** the housing (44) is cut by laser from the first planar part (12).

8. The arrangement as claimed in any one of the preceding claims, **characterized in that** the first and second parts (12, 14) comprise complementary assembly means employing geometrical engagement, such as pins (90) and sockets (92), in such a way as both to line up and limit the deformation of the parts (12, 14) during clamping.

9. The arrangement as claimed in any one of the preceding claims, **characterized in that** the axial clamping force is applied along a screw-fastening axis (X) which lies within the vertical plane of longitudinal orientation of the first part (12).

## Patentansprüche

1. Anordnung (10) zur Zusammensetzung zweier Teile (12,14) durch Schraubbefestigung über ein Schrauben-Muttern-System (16, 18, 24) mit:
- einem ersten ebenen, vertikalen Teil (12) mit allgemeiner Längsausrichtung
- einem zweiten Teil (14) mit allgemeiner Querausrichtung orthogonal zu der Ebene des ersten Teils (12), das mindestens eine erste Auflagefläche (50) und eine zweite Auflagefläche (52) besitzt, die in der zusammengesetzten Position jeweils mit einer Reaktionsfläche (54) des ersten Teils (12) und mit einer Klemmfläche (56) der Schraube (18) zusammenwirken, wobei der Gewindestift (22) der Schraube (18) axial durch das zweite Teil (14) verläuft, so dass ein Abschnitt (28) der Schraube (18) eine axiale Spannkraft auf die zweite Auflagefläche (52) ausübt, um das erste und das zweite Teil (12, 14) festzusetzen bzw. zu immobilisieren, **dadurch gekennzeichnet, dass** das erste Teil eine Aufnahme (44) besitzt, die axial entlang einer Schraubachse in der vertikalen Ebene mit Längsausrichtung des ersten Teils (12) verläuft, und in der die Schraube (18) und die Mutter (24) aufgenommen werden, von der mindestens ein Abschnitt (32, 34) mit einer Anschlagfläche (46) der Aufnahme (44) zusammenwirkt, so dass die Mutter (24) während der Anwendung einer Spannkraft axial immobilisiert bzw. festgesetzt wird.

2. Anordnung nach Anspruch 1, **dadurch gekennzeichnet, dass** die erste und zweite Auflagefläche (50, 52) und die Reaktionsflächen (54) und Klemmflächen (56) im allgemeinen jeweils in einer vertikalen Ebene mit Querausrichtung orthogonal zu der Ebene des ersten Teils (12) verlaufen.

3. Anordnung nach einem der Ansprüche 1 oder 2, **dadurch gekennzeichnet, dass** es sich bei der Anschlagfläche (46) um ein erstes axiales, distales Ende (48) der Aufnahme (44) handelt.

4. Anordnung nach einem der vorhergehenden Ansprüche, **dadurch gekennzeichnet, dass** sich die Reaktionsfläche (54) am anderen axialen, proximalen Ende (58) der Aufnahme (44) befindet.

5. Anordnung nach einem der vorhergehenden Ansprüche, **dadurch gekennzeichnet, dass** es sich bei der Klemmfläche (56) der Schraube (18) um die ringförmige Fläche (28) des Kopfes (20) handelt, von der aus der Gewindestift (22) verläuft.

6. Anordnung nach einem der vorhergehenden Ansprüche, **dadurch gekennzeichnet, dass** die Aufnahme (44) an ihrem proximalen Ende (58) in ein Ende (70) des ersten Teils (12) mündet, das die Reaktionsfläche (54) bildet.

7. Anordnung nach einem der vorhergehenden Ansprüche, **dadurch gekennzeichnet, dass** man die Aufnahme (44) durch einen Laserschnitt durch das erste ebene Teil (12) erhält.

8. Anordnung nach einem der vorhergehenden Ansprüche, **dadurch gekennzeichnet, dass** das erste und zweite Teil (12, 14) zusätzliche Elemente zur Zusammensetzung durch Zusammenwirken von Formen besitzt, wie Zapfen (90) und Zapfenlöcher (92), um die Zentrierung zu gewährleisten, und um die Verformung der Teile (12, 14) während des Einspannens oder Einklemmens zu begrenzen.

9. Anordnung nach einem der vorhergehenden Ansprüche, **dadurch gekennzeichnet, dass** die axiale Spannkraft entlang einer Schraubachse (X) ausgeübt wird, die sich in der vertikale Ebene mit Längsausrichtung des ersten Teils (12) befindet.
